# EUROPÄISCHE PATENTSCHRIFT

(11) **EP 2 017 106 B1**
(45) Veröffentlichungstag und Bekanntmachung des Hinweises auf die Patenterteilung: **17.07.2013**
(21) Anmeldenummer: 08012799.6
(22) Anmeldetag: 16.07.2008
(51) Int. Cl.: B60J 5/04, E06B 7/32

(54) **Vorrichtung zum Einbauen in eine Karosserie eines Fahrzeugs**
Device for fitting in a vehicle car body
Dispositif à monter dans une carrosserie d'un véhicule

(30) Priorität: 16.07.2007 DE 102007033332
(43) Veröffentlichungstag der Anmeldung: 21.01.2009
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Dobler, Markus

(56) Entgegenhaltungen:
- WO-A1-2004/057146
- CN-Y- 2 883 633
- JP-U- 58 111 621
- US-A1- 2003 214 150
- US-A1- 2007 000 449

## Beschreibung

Die Erfindung betrifft eine Vorrichtung nach Anspruch 1, eine Fahrzeugaußentür nach Anspruch 10 und ein Fahrzeug nach Anspruch 11.

### Stand der Technik

Im Fahrzeugbau ist es bekannt, Neufahrzeuge ausgehend von einer betriebsbereiten Grundkonfiguration eines Fahrzeuges je nach Verwendungszweck bzw. individuellen Wünschen des späteren Fahrzeugnutzers zu modifizieren. Die nachträglich vorgenommenen Modifikationen können beispielsweise das Fahrzeuginnere oder die Fahrzeugkarosserie betreffen. Zwar sind die Fahrzeuge in der Grundkonfiguration vollständig für die Zulassung im Straßenverkehr geeignet, weisen aber in der Regel z.B. aus Kostengründen nur eine vergleichsweise primitive Basis-Ausstattung auf, da diese ohnehin später noch angepasst wird. So lässt sich wirtschaftlich vorteilhaft ein Fahrzeug-Grundtyp herstellen, was insbesondere zum Beispiel für Transporter, Kleinbusse, Kastenwagen und dergleichen Vorteile mit sich bringt, da diese Fahrzeuge in einer Vielzahl unterschiedlicher Spezialversionen zum Einsatz kommen. Der Fahrzeug-Grundtyp kann aber insbesondere an spezielle Einsatzzwecke angepasst werden wie beispielsweise zur Nutzung als Camping-, Transport- oder Werkstattfahrzeug.

Aber auch an beliebigen anderen Fahrzeugen, bei denen in der Regel keine Veränderungen nach der Fertigstellung vorgenommen werden, kann es gewünscht sein, nachträglich Veränderungen vorzunehmen.

In allen Fällen können je nach gewünschter Endnutzung die Umbaumaßnahmen an der Karosserie des Fahrzeugs zur Anpassung an den späteren Verwendungszweck vergleichsweise optisch stark in Erscheinung treten, was meist unerwünscht ist. Außerdem stehen nicht für sämtliche Spezialanforderungen zum Beispiel im Campingbereich befriedigende Lösungen zur Verfügung.

Die WO 2004/057146 A1 betrifft eine Sicherheits-Eingangstür für Fahrzeuge mit einem Rahmen, wenigstens einem Schiebeabschnitt innerhalb des Rahmens und einem Schnellhebel an einer Innenseite zum Schließen und Öffnen der Eingangstür mit einem ersten Schloss. Der Schiebeabschnitt weist ein zweites Schloss auf, um den Schiebeabschnitt in einer geschlossenen Position zu sichern, wobei nach einem Entsichern des zweiten Schlosses mit einem Schlüssel und einem Aufschieben des Schiebeabschnitts ein Zugang zu dem Schnellhebel von außen ermöglicht wird.

### Aufgabe und Vorteile der Erfindung.

Aufgabe der vorliegenden Erfindung ist es, die konstruktive Anpassung von Fahrzeugen für eine spätere Endnutzung sowohl unter technischen Gesichtspunkten als auch im Hinblick auf ein gewünschtes Erscheinungsbild zu verbessern. Dies wird durch Anspruch 1 gelöst. In den Unteransprüchen sind vorteilhafte Weiterbildungen der Erfindung aufgezeigt.

Die Erfindung geht zunächst aus von einer Vorrichtung zum Einbauen in eine Karosserie eines Fahrzeugs, wobei die Vorrichtung im Bereich einer nachträglich in der Karosserie bereitgestellten Ausnehmung einsetzbar ist. Ein wesentlicher Aspekt der Erfindung liegt darin, dass die Vorrichtung ausgebildet ist, in eine Ausnehmung an einem für einen Zugang in das Fahrzeuginnere bewegbaren Karosserieabschnitt eingesetzt zu werden, und derart gestaltet ist, dass eine Außenkontur des Karosserieabschnitts bei eingesetzter Vorrichtung im Wesentlichen der Außenkontur entspricht, die zuvor ohne Ausnehmung vorhanden war. Damit können insbesondere im Bereich von bewegbaren Karosserieabschnitten, wie beispielsweise Türen, Klappen oder Fenstern Modifikationen derart vorgenommen werden, dass diese bzw. die dabei ggf. eingebauten Elemente die Karosserie optisch nicht bzw. nur unwesentlich verändern. Dadurch kann zum Beispiel Wünschen des Endnutzers in Bezug auf eine möglichst unauffällige Veränderung des äußeren Erscheinungsbilds des Fahrzeugs entsprochen werden. Insbesondere kann damit erreicht werden, dass der äußere Gesamteindruck des Fahrzeugs erhalten bleibt bzw. auch nicht abschnittsweise unterbrochen wird. Dies betrifft insbesondere bewegbare Karosserieabschnitte wie z.B. Fahrzeugtüren, da diese wesentliche Abschnitte des Fahrzeugäußeren betreffen.

Insbesondere bei Fahrzeugtüren ist daher darauf zu achten, dass die Lackierung der betreffenden Karosserieelemente, die Karosserieoberflächen, die Fahrzeugaußenkonturen bzw. profilierte Abschnitte des Fahrzeugäußeren, die auch Einsätze in der Karosserie wie beispielsweise Zierleisten umfassen können, durch nachträgliche Anpassungen nicht oder nur geringfügig verändert werden. Diese Konturen und ggf. Elemente sind so an der Vorrichtung vorzusehen, dass mit deren nachträglicher Anbringung der entnommene Karosserieabschnitt äußerlich identisch ersetzt wird.

Weiter wird vorgeschlagen, dass die Vorrichtung ausgestaltet ist, im eingesetzten Zustand die Ausnehmung zumindest nahezu vollständig auszufüllen. Durch das vollständige Ersetzen bzw. Ausfüllen der im bewegbaren Karosserieabschnitt eingesetzten Vorrichtung kann erreicht werden, dass gegenüber dem vorherigen Zustand die Veränderung optisch nicht oder nur wenig ins Auge fällt.

Insbesondere an bewegbaren Karosserieabschnitten, welche wesentliche Flächenbereiche der Karosserie eines Fahrzeuges ausmachen, kommt es immer wieder vor, dass nachträglich vorzunehmende Veränderungen bzw. Modifizierungen der Karosserie notwendig bzw. erwünscht sind.

Es ist außerdem vorteilhaft, dass die Vorrichtung ein Einsetzteil umfasst, welches an Randabschnitten der Ausnehmung angrenzend einsetzbar ist. Damit lässt sich die Vorrichtung bzw. deren Einsetzteil ohne Unterbrechung des Äußeren bzw. optisch unauffällig in den betreffenden Karosserieabschnitt integrieren. Denn insbesondere ein Übergangsbereich zwischen der Ausnehmung und dem eingesetzten Einsetzteil ist kritisch im Hinblick auf eine zuvor bestehende Optik der Fahrzeugkarosserie. Durch das Erstrecken des Einsetzteils bis an den Rand der Ausnehmung, kann das Einsetzteil damit nicht nur optisch unauffällig sondern auch stabil an dem Rand der Ausnehmung aufgenommen werden. Dafür ist das Einsetzteil an dessen äußerem Rand entsprechend ausgestaltet bzw. an die Randabschnitte der Ausnehmung angepasst. Das Einsetzteil kann z.B. angeschweißt, angeklebt, angenietet oder auf eine beliebige andere Art an den Randabschnitten der Ausnehmung befestigt werden.

Weiter wird vorgeschlagen, dass Dichtmittel vorhanden sind, mit denen das eingesetzte Einsetzteil an den Randabschnitten der Ausnehmung dicht anschließt. Damit lässt sich auf einfache und sichere Weise erreichen, dass durch das eingebaute Einsetzteil keine Undichtigkeit der Karosserie auftritt. Insbesondere beim nachträglichen Einbringen der Vorrichtung nicht durch den Fahrzeughersteller in ein fertig produziertes Fahrzeug, ist daher im Bereich der Randabschnitte der Ausnehmung der Übergang zwischen dem Einsetzteil und der Ausnehmung durch geeignete Dichtmittel auszustatten. Als Dichtmittel können beispielsweise entlang dem Rand der Ausnehmung umlaufende Dichtelemente beispielsweise aus Kautschuk oder einem gummi- oder schaumstoffartigen Material vorgesehen werden. Es sind auch bekannte andere Dichtmittel verwendbar, zum Beispiel können fließfähige bzw. aushärtende Dichtmaterialien im Bereich der Randabschnitte zwischen der Ausnehmung und dem Einsetzteil eingebracht werden, beispielsweise Dichtschaum, was zusätzlich ggf. eine Klebwirkung zwischen dem Randabschnitt der Ausnehmung und dem Einsetzteil aufweist.

In einer überdies bevorzugten Ausgestaltungsform des Erfindungsgegenstandes ist mit dem eingesetzten Einsetzteil ein schließbarer Durchgang für Personen zwischen einem Fahrzeuginneren und einem Außenbereich des Fahrzeugs bereitstellbar. Somit kann auf einfache Weise insbesondere eine zusätzliche Möglichkeit geschaffen werden in das Fahrzeug zu gelangen bzw. einen Ausgang aus dem Fahrzeuginneren nach draußen zu realisieren. Gerade beim Einsatz der Fahrzeuge in unterschiedlichen räumlichen Umgebungen, wie es insbesondere beispielsweise bei Campingfahrzeugen regelmäßig der Fall ist, kann es vorteilhaft sein, wenn ein weiterer Zugang zum Fahrzeuginneren bzw. ein zusätzlicher Ausgang des Fahrzeugs bereitstellbar ist.

Besonders bevorzugt ist es, dass Führungsmittel vorgesehen sind, mit denen das in die Ausnehmung eingesetzte Einsetzteil beweglich am bewegbaren Karosserieabschnitt aufgenommen ist. Insbesondere beim Einsatz des Fahrzeugs als Campingfahrzeug kann es hilfreich sein, dass im bewegbaren Karosserieabschnitt die eingebrachte Vorrichtung ebenfalls bewegbar daran aufgenommen ist. Beispielsweise sind bei Campingfahrzeugen Seitentüren aus praktischen Gründen häufig als Schiebetüren ausgebildet. Das Hin- bzw. Herschieben der Schiebetüre ist jedoch immer mit einem nicht unerheblichen Geräusch verbunden, was gerade beim Campen auf Campingplätzen mit dichter Belegung des Campinggeländes nachteilig ist. Insbesondere in der direkten Nachbarschaft ist das Geräusch beim Verschieben der Schiebetüre störend bzw. ist gerade nachts unerwünscht und kann den nachbarschaftlichen Frieden empfindlich beeinträchtigen. Mit der erfindungsgemäßen Vorrichtung ist es beispielsweise bequem möglich, wenn diese z.B. als Schwenktür oder -klappe ausgebildet ist, einen Zugang bzw. eine Tür in das Wageninnere bereitzustellen, die ein nahezu geräuschloses Öffnen und Schließen dieser Tür ermöglicht. Die Funktion der Schiebetür bzw. des bewegbaren Karosserieabschnitts bleibt davon unbeeinflusst. Mit der Vorrichtung wird vorteilhafterweise eine Zusatzfunktion ohne Beschränkung bestehender Funktionen am Fahrzeug realisiert. Die Art bzw. Größe des Einsetzteils bzw. der eingesetzten Vorrichtung kann je nach individuellen Wünschen bzw. je nach betreffendem Fahrzeugtyp variabel angepasst gestaltet werden.

Vorteilhafterweise wird mit den Führungsmitteln eine Schwenkbewegung des eingesetzten Teils erreicht, es sind aber auch andere Lösungen denkbar, z.B. eine geräuscharme Verschiebetür oder eine rolladenartige Tür. Grundsätzlich sind auch andere Einsätze bzw. Vorrichtungen in dem bewegbaren Krosserieabschnitt, der auch eine Schwenktür oder -klappe sein kann, nachträglich anbringbar, z.B. ein Schwenk- oder Schiebefenster. Die vorgeschlagene Lösung kann daher insbesondere im Campingbereich bzw. bei Camping-Fahrzeugen in vielfältigen Ausführungsformen eingesetzt werden.

Besonders vorteilhaft ist es, dass das Einsetzteil aus einem Material besteht, welches zumindest im Wesentlichen dem Material entspricht, aus dem der bewegbare Karosserieabschnitt besteht. Damit kann ohne Abstriche im Hinblick auf die Qualität bzw. mechanische Stabilität des bewegbaren Karosserieabschnitts die Vorrichtung darin integral untergebracht werden. Dies ist insbesondere auch aus sicherheitstechnischen Gründen von Bedeutung. Sollten Karosserie-Verstärkungen im Bereich des bewegbaren Karosserieabschnitts vorhanden sein, welche mit der Ausnehmung beeinträchtigt werden oder entnommen werden, sind insbesondere Vorkehrungen zu treffen, damit mit der eingesetzten Vorrichtung die entsprechenden Belastungs- bzw. mechanischen Stabilitätswerte erreicht werden, die zuvor ohne Ausnehmung im bewegbaren Karosserieabschnitt erfüllt wurden.

Eine modifizierte Ausgestaltung des Erfindungsgegenstandes sieht vor, dass Stabilisierungselemente vorhanden sind, durch welche das Einsetzteil mechanisch verstärkt ist. Damit können auch höchste mechanische Anforderungen an das Fahrzeug bzw. den bewegbaren Karosserieabschnitt sicher verwirklicht werden, wenn nachträglich die Vorrichtung bzw. das Einsetzteil eingesetzt wurde bzw. dazu entsprechende Maßnahmen an der Karosserie vorgenommen wurden. Dies ist insbesondere aus sicherheitstechnischen Gründen gewünscht bzw. nötig, um gegebenenfalls Vorgaben von Zulassungsbehörden bzw. vom Gesetzgeber einzuhalten.

Mit der Erfindung lässt sich außerdem ein Bausatz zum nachträglichen Einbau in einen Abschnitt einer Fahrzeugkarosserie bereitstellen, wobei der Bausatz eine Vorrichtung gemäß einer der oben genannten Varianten umfasst. Damit kann mit einem Bausatz zum Beispiel unter Bereitstellung der notwendigen Bauteile bzw. unter Angabe einer Einbauvorschrift nachträglich an einer Fahrzeugkarosserie eine entsprechende Vorrichtung je nach individuellen Wünschen angebracht werden.

Außerdem betrifft die Erfindung eine Fahrzeugaußentür, welche als Schiebetür ausgebildet ist, welche eine Vorrichtung wie oben beschrieben aufweist. Insbesondere bei Fahrzeugaußentüren lässt sich die oben genannte Vorrichtung mit den dabei erzielbaren Vorteilen zweckmäßig ausgestalten. Neben der beschriebenen Vorgehensweise, die Vorrichtung an dem fertigen Fahrzeug einzubauen, kann die Vorrichtung auch vor dem Zusammenbau des Fahrzeugs an einem Karosserieabschnitt des Fahrzeugs bzw. einer Schiebetür eingesetzt werden, so dass der so vorbereitete Karosserieabschnitt bzw. die so vorbereitete Fahrzeugschiebetür fertig vorproduziert ist und danach für den Zusammenbau und die Fertigstellung des Fahrzeugs zur Verfügung steht.

Schließlich betrifft die Erfindung ein Fahrzeug, insbesondere Kleinbus, Transporter bzw. Camping-Fahrzeug mit einer der oben genannten Vorrichtung. Damit lassen sich die diskutierten Vorteile insbesondere für Transport- bzw. Campingfahrzeuge nutzen.

## Patentansprüche

1. Vorrichtung zum Einbauen in eine Karosserie eines Fahrzeugs, wobei die Vorrichtung im Bereich einer nachträglich in der Karosserie bereitgestellten Ausnehmung eingesetzt wird, wobei die Vorrichtung ausgebildet ist, in eine Ausnehmung an einem für einen Zugang in das Fahrzeuginnere bewegbaren Karosserieabschnitt eingesetzt zu werden, wobei der bewegbare Karosserieabschnitt als Schiebetür, Schwenktür oder Schwenkklappe ausgebildet ist, so dass die Vorrichtung in dieser Ausnehmung am bewegbaren Karosserieabschnitt eingesetzt ist, und wobei die Vorrichtung derart gestaltet ist, dass eine Außenkontur des Karosserieabschnitts bei eingesetzter Vorrichtung im Wesentlichen der Außenkontur entspricht, die zuvor ohne Ausnehmung vorhanden war, **dadurch gekennzeichnet, dass** mit der eingesetzten Vorrichtung ein Zugang oder eine Tür für Personen in das Fürzeuginnere bereitgestellt wird.

2. Vorrichtung nach Anspruch 1, **dadurch gekennzeichnet, dass** die Vorrichtung ausgestaltet ist, im eingesetzten Zustand die Ausnehmung zumindest nahezu vollständig auszufüllen.

3. Vorrichtung nach Anspruch 1 oder 2, **dadurch gekennzeichnet, dass** die Vorrichtung ein Einsetzteil umfasst, welches an Randabschnitten der Ausnehmung angrenzend einsetzbar ist.

4. Vorrichtung nach einem der vorhergehenden Ansprüche, **dadurch gekennzeichnet, dass** Dichtmittel vorhanden sind, mit denen das eingesetzte Einsetzteil an den Randabschnitten der Ausnehmung dicht anschließt.

5. Vorrichtung nach einem der vorhergehenden Ansprüche, **dadurch gekennzeichnet, dass** mit Führungsmitteln eine Schwenk- und/oder Verschiebebewegung des Einsetzteils gegenüber dem bewegbaren Karosserieabschnitt' möglich ist.

6. Vorrichtung nach einem der vorhergehenden Ansprüche,
**dadurch gekennzeichnet, dass** mit dem eingesetzten Einsetzteil ein schließbarer Durchgang für Personen zwischen einem Fahrzeuginneren und einem Außenbereich des Fahrzeugs bereitstellbar ist.

7. Vorrichtung nach einem der vorhergehenden Ansprüche, dadurch gekenntzeichnet, dass Führungsmittel vorgesehen sind, mit denen das in die Ausnehmung eingesetzte Einsetzteil beweglich am bewegbaren Karosserieabschnitt aufgenommen ist.

8. Vorrichtung nach einem der vorhergehenden Ansprüche, **dadurch gekennzeichnet, dass** das Einsetzteil aus einem Material besteht, welches zumindest im Wesentlichen dem Material entspricht, aus dem der bewegbare Karosserieabschnitt besteht.

9. Vorrichtung nach einem der vorhergehenden Ansprüche, **dadurch gekennzeichnet, dass** Stabilisierungselemente vorhanden sind, durch welche das Einsetzteil mechanisch verstärkt ist.

10. Fahrzeugaußentür, welche als Schiebetür, Schwenktür oder Schwenkklappe ausgebildet ist mit einer Vorrichtung gemäß einem der vorhergehenden Ansprüche 1 bis 9.

11. Fahrzeug, insbesondere Kleinbus, Transporter bzw. Camping-Fahrzeug mit einer Vorrichtung gemäß einem der Ansprüche 1 bis 9 und/oder einer Fahrzeugaußentür gemäß Anspruch 10.

## Claims

1. A device for the Installation into the auto body of a vehicle, wherein the device is being inserted in the region of a recess retrospectively provided in the auto body, wherein the device is embodied in order to be inserted into a recess on aauto body section that is movable for access into the vehicle interior, wherein the movable auto body section is embodied as a sliding door, pivoting door, or pivoting hatch such that the device is inserted in said recess on the movable auto body section, and wherein the device is embodied such that with an inserted device an exterior contour of the auto body section corresponds essentially to the exterior contour that was previously available without the recess, **characterized in that** an access, or a door for persons into the vehicle interior is being provided with the inserted device.

2. The device according to claim 1, **characterized in that** the device is embodied In order to fill out the recess at least nearly completely in the inserted state.

3. The device according to claims 1 or 2, **characterized in that** the device comprises an insertion part, which may be inserted adjacent to the edge sections of the recess.

4. The device according to one of the previous claims, **characterized in that** sealing means are provided, by means of which the inserted insertion part closely adjoins the edge sections of the recess.

5. The device according to one of the previous claims, **characterized in that** a pivoting and/or displacement movement of the insertion part opposite of the movable auto body section is enabled via guide means.

6. The device according to one of the previous claims, **characterized in that** a closable passage may be provided for persons between a vehicle interior and an exterior region of the vehicle by means of the inserted insertion part.

7. The device according to one of the previous claims, **characterized in that** guide means are provided, by means of which the insertion part inserted into the recess Is received in a movable manner on the movable auto body section.

8. The device according to one of the previous claims, **characterized in that** the insertion part is made of a material corresponding at least essentially to that material, which the movable auto body section consists of.

9. The device according to one of the previous claims, **characterized in that** stabilizing elements are provided, by means of which the insertion part is mechanically reinforced.

10. A vehicle exterior door being embodied as a sliding door, pivoting door, or pivoting hatch, having a device according to one of the previous claims 1 to 9.

11. A vehicle, in particular a mini-van, van, or a camping vehicle, having a device accarding to one of the claims 1 to 9, and/or a vehicle exterior door according to claim 10.

## Revendications

1. Dispositif à monter dans une carrosserie d'un véhicule, ledit dispositif étant inséré dans la zone d'une exclusion mise à disposition ultérieurement dans la carrosserie, ledit dispositif étant réalisé pour être inséré dans une exclusion au niveau d'une partie de carrosserie mobile pour un accès à l'intérieur du véhicule, ladite partie de carrosserie mobile étant conçue sous forme de porte coulissante, porte pivotante ou trappe pivotante, de telle sorte que le dispositif est inséré dans ladite exclusion sur la partie de carrosserie mobile, et ledit dispositif étant configuré de telle sorte que, lorsque le dispositif est mis en place, un contour extérieur de ladite partie de carrosserie correspond sensiblement au contour extérieur existant préalablement sans exclusion, **caractérisé en ce que** par le dispositif monté, il est mis à disposition un accès ou une porte pour personnes vers l'intérieur du véhicule.

2. Dispositif selon la revendication 1, **caractérisé en ce que** ledit dispositif est configuré pour remplir au moins presque intégralement l'exclusion dans la position montée.

3. Dispositif selon la revendication 1 ou 2, **caractérisé en ce que** ledit dispositif comporte une partie à insérer pouvant être montée de manière adjacente aux bords de l'exclusion.

4. Dispositif selon l'une quelconque des revendications précédentes, **caractérisé en ce qu'**il est prévu des moyens d'étanchéité par lesquels la partie à insérer mise en place est accolée de manière étanche contre les bords de l'exclusion.

5. Dispositif selon l'une quelconque des revendications précédentes, **caractérisé en ce que** des moyens de guidage permettent un mouvement de pivotement et/ou un mouvement de translation de la partie à insérer par rapport à la partie de carrosserie mobile.

6. Dispositif selon l'une quelconque des revendications précédentes, **caractérisé en ce que** la partie à insérer mise en place permet de mettre à disposition un passage pour personnes pouvant être fermé entre l'intérieur d'un véhicule et une zone extérieure du véhicule.

7. Dispositif selon l'une quelconque des revendications précédentes, **caractérisé en ce qu'**il est prévu des moyens de guidage par lesquels la partie à insérer mise en place dans l'exclusion est supportée de manière mobile sur la partie de carrosserie mobile.

8. Dispositif selon l'une quelconque des revendications précédentes, **caractérisé en ce que** la partie à insérer est réalisée dans un matériau qui correspond au moins sensiblement au matériau dans lequel est réalisée la partie de carrosserie mobile.

9. Dispositif selon l'une quelconque des revendications précédentes, **caractérisé en ce qu'**il est prévu des éléments de stabilisation qui permettent de renforcer mécaniquement la partie à insérer.

10. Porte extérieure de véhicule, laquelle est réalisée sous forme de porte coulissante, porte pivotante ou trappe pivotante, comportant un dispositif selon l'une quelconque des revendications précédentes 1 à 9.

11. Véhicule, en particulier minibus, camionnette ou camping-car comportant un dispositif selon l'une quelconque des revendications 1 à et/ou une porte extérieure de véhicule selon la revendication 10.
